# EUROPÄISCHE PATENTSCHRIFT

(11) **EP 3 913 234 B1**
(45) Veröffentlichungstag und Bekanntmachung des Hinweises auf die Patenterteilung: **07.06.2023**
(21) Anmeldenummer: 21171923.2
(22) Anmeldetag: 04.05.2021
(51) Int. Cl.: F16B 5/00, F16B 2/24

(54) **STECKVERBINDUNGSSYSTEM MIT WENIGSTENS EINEM ERSTEN ELEMENT UND EINEM ZWEITEN ELEMENT**
CONNECTOR SYSTEM WITH AT LEAST ONE FIRST ELEMENT AND ONE SECOND ELEMENT
SYSTÈME DE CONNEXION ENFICHABLE POURVU D'AU MOINS UN PREMIER ÉLÉMENT ET D'UN SECOND ÉLÉMENT

(30) Priorität: 19.05.2020 DE 102020113532
(43) Veröffentlichungstag der Anmeldung: 24.11.2021
(73) Patentinhaber: Binder GmbH, 78532 Tuttlingen (DE)
(72) Erfinder: Seligmann, Nina, 78652 Deisslingen (DE); Moll, Jan, 78166 Donaueschingen (DE)
(74) Vertreter: Westphal, Mussgnug & Partner Patentanwälte mbB

(56) Entgegenhaltungen:
- EP-B1- 1 211 365
- US-A- 4 936 078
- US-A- 5 216 861
- US-A- 5 404 686
- US-A- 5 502 939

## Beschreibung

Die Erfindung betrifft ein Steckverbindungssystem mit wenigstens einem ersten Element und einem zweiten Element.

Die US 4 936 078 A offenbart ein Steckverbindungssystem nach dem Stand der Technik.

Bekannt sind Steckverbindungssysteme mit wenigstens einem ersten Element und einem zweiten Element, bei welchen beispielsweise zwei Bleche durch ein Stecksystem miteinander verbunden werden. Diese weisen jedoch oft ein großes Spiel relativ zueinander auf und bilden in der Regel keine dichte Verbindung. Die Aufgabe der Erfindung besteht daher darin, ein verbessertes Steckverbindungssystem mit wenigstens einem ersten Element und einem zweiten Element bereitzustellen, welches insbesondere eine dichte, insbesondere schaumdichte, Verbindung der beiden Elemente ohne großen Aufwand ermöglicht.

Die Aufgabe wird erfindungsgemäß gelöst durch ein Steckverbindungssystem mit wenigstens einem ersten Element und einem zweiten Element mit den Merkmalen des Patentanspruchs 1. Vorteilhafte Ausgestaltungen und Weiterbildungen der Erfindung sind in den abhängigen Ansprüchen angegeben.

Das erfindungsgemäße Steckverbindungssystem mit wenigstens einem ersten Element und einem zweiten Element, wobei das erste Element einen biegbaren ersten Grundkörper aufweisend eine erste Außenfläche und eine erste Innenfläche und das zweite Element einen biegbaren zweiten Grundkörper aufweisend eine zweite Außenfläche und eine zweite Innenfläche aufweist, wobei der erste Grundkörper einen ersten Außenabschnitt und einen ersten Verbindungsabschnitt aufweisend einen ersten Abstandsabschnitt und einen ersten Befestigungsabschnitt, wobei der erste Abstandsabschnitt zwischen dem ersten Außenabschnitt und dem ersten Befestigungsabschnitt angeordnet ist, und der zweite Grundkörper einen zweiten Außenabschnitt und eine zweiten Verbindungsabschnitt aufweisend einen zweiten Abstandsabschnitt und einen zweiten Befestigungsabschnitt, wobei der zweite Abstandsabschnitt zwischen dem zweiten Außenabschnitt und dem zweiten Befestigungsabschnitt angeordnet ist, aufweist, wobei der erste Abstandsabschnitt an dem ersten Außenabschnitt unter Bildung eines an der ersten Innenfläche gebildeten im Wesentlichen rechten ersten Winkels angeordnet ist und der erste Befestigungsabschnitt an dem ersten Abstandsabschnitt unter Bildung eines an der ersten Außenfläche gebildeten im Wesentlichen rechten zweiten Winkels angeordnet ist, wobei der zweite Abstandsabschnitt an dem zweiten Außenabschnitt unter Bildung eines an der zweiten Innenfläche gebildeten im Wesentlichen rechten dritten Winkels angeordnet ist und der zweite Befestigungsabschnitt an dem zweiten Abstandsabschnitt unter Bildung eines an der zweiten Innenfläche gebildeten im Wesentlichen rechten vierten Winkels angeordnet ist, weist ferner eine Ausbildung des zweiten Befestigungsabschnitt etwa U-förmig mit einem ersten Schenkel und einem zweiten Schenkel auf, wobei der erste Schenkel im Wesentlichen parallel zum zweiten Außenabschnitt angeordnet ist und der zweite Schenkel in einer parallel zum ersten Außenabschnitt und/oder zweiten Außenabschnitt, vorzugsweise parallel zum ersten und zweiten Außenabschnitt, verlaufenden Steckrichtung gesehen einen Hinterschnitt umfasst, und weist an dem ersten Befestigungsabschnitt einen Rastvorsprung auf, der bei Einführen in Steckrichtung in den zweiten Befestigungsabschnitt hinter dem Hinterschnitt verrastet.

Eine derartige Ausgestaltung der Steckverbindung zwischen dem ersten Element und dem zweiten Element weist den Vorteil auf, dass diese Steckverbindung durch eine einfache Bewegung in Steckrichtung etwa parallel zur Außenfläche herstellbar ist, ohne dass weitere Montageschritte erforderlich sind. Dabei wird durch die Rastverbindung eine zuverlässige Verbindung hergestellt, welche in der Regel nicht ohne weiteres wieder lösbar ist. Weiterhin kann eine derartige Steckverbindung eine dichte, insbesondere schaumdichte, Verbindung zwischen den beiden Elementen ermöglichen, so dass beispielsweise ein Schaum auf die Innenfläche beider Elemente aufgebracht werden kann, ohne dass zusätzliche Maßnahmen, welche verhindern sollen, dass Schaum austritt, bevor er aushärtet, erforderlich sind.

Vorzugsweise liegen im verbundenen Zustand der erste Abstandsabschnitt und der zweite Abstandsabschnitt flächig aneinander an. Dadurch kann die Dichtigkeit der Verbindung weiter erhöht werden.

Eine vorteilhafte Weiterbildung der Erfindung sieht vor, dass der erste Abstandsabschnitt eine erste Länge aufweist, welche insbesondere dem Abstand zwischen dem ersten Außenabschnitt und dem ersten Befestigungsabschnitt entspricht, und dass der zweite Abstandsabschnitt eine zweite Länge aufweist, welche insbesondere dem Abstand zwischen dem zweiten Außenabschnitt und dem zweiten Befestigungsabschnitt entspricht, und dass die erste Länge und die zweite Länge derart aufeinander abgestimmt sind, dass im verbundenen Zustand die erste Außenfläche des ersten Außenabschnitts und die zweite Außenfläche des zweiten Außenabschnitts in einer Ebene liegen. Durch eine derartige Ausgestaltung kann auf einfache Art und Weise eine korrekte Positionierung der Sichtflächen, nämlich der Außenflächen, relativ zueinander erreicht werden.

Gemäß einer bevorzugten Ausführungsform der Erfindung weist zur Bildung des Rastvorsprungs der erste Befestigungsabschnitt einen ersten Teilabschnitt, welcher sich an den ersten Abstandsabschnitt anschließt, und einen sich an einer Kante an den ersten Teilabschnitt anschließenden zweiten Teilabschnitt auf, wobei der zweite Teilabschnitt an der Kante auf den ersten Teilabschnitt gefaltet ist, wobei der erste Teilabschnitt eine dritte Länge und der zweite Teilabschnitt eine vierte Länge aufweist, und wobei die vierte Länge kleiner ist als die dritte Länge. Diese Ausgestaltung ermöglicht auf einfache Art und Weise die Herstellung des Rastvorsprungs.

Vorzugsweise weist zur Bildung des Hinterschnitts der zweite Schenkel des zweiten Befestigungsabschnitts eine konkave Biegung, beispielsweise in Form eines Knicks mit einem Außenwinkel zwischen 100° und 170°, auf. Dies ermöglicht eine einfache und kostengünstige Herstellung des Hinterschnitts.

Gemäß einer vorteilhaften Weiterbildung der Erfindung weist der erste Verbindungsabschnitt eine Breite auf, welcher der Breite des ersten Außenabschnitts entspricht, und der zweite Verbindungsabschnitt eine Breite auf, welcher der Breite des zweiten Außenabschnitts entspricht. Dadurch wird eine Verbindung der beiden Elemente über die gesamte Breite ermöglicht.

Vorzugsweise ist das erste Element einstückig und/oder das zweite Element einstückig ausgebildet. Dies ermöglicht eine einfache Herstellung.

Eine bevorzugte Ausgestaltung der Erfindung sieht vor, dass das erste Element und/oder das zweite Element aus einem Blech, insbesondere einem Stahlblech, besonders bevorzugt aus einem Edelstahlblech, gefertigt sind.

Gemäß einer vorteilhaften Weiterbildung der Erfindung sind das erste Element und das zweite Element als Stanz-Biege-Element ausgebildet, was eine einfache Herstellung ermöglicht.

Vorteilhafterweise kommt ein erfindungsgemäßes Steckverbindungssystem mit wenigstens einem ersten Element und einem zweiten Element in einem Gehäuse eines Klima- oder Temperaturschranks zur Anwendung. Das erfindungsgemäße Steckverbindungssystem ermöglicht es, wenigstens ein erstes Element und ein zweites Element, welche als Teile des Gehäuses des Klima- oder Temperaturschranks ausgebildet sind, auf einfache Art und Weise zusammenzustecken, wobei eine dichte, insbesondere schaumdichte Verbindung gebildet wird, so dass anschließend das Gehäuse des Klima- oder Temperaturschranks mit einem Schaum, insbesondere einem aushärtenden Isolierschaum, ausgeschäumt werden kann, ohne dass zusätzliche Maßnahmen, die einen Austritt des Schaums vor Aushärtung aus dem Gehäuse verhindern, getroffen werden müssen.

Ein erfindungsgemäßes Gehäuse eines Klima- oder Temperaturschranks umfasst ein erfindungsgemäßes Steckverbindungssystem mit wenigstens einem ersten Element und einem zweiten Element, wobei das erste Element und das zweite Element jeweils als Teil des Gehäuses ausgebildet sind.

Die Erfindung wird anhand der folgenden Figuren ausführlich erläutert. Es zeigen
- Figur 1: eine perspektivische Ansicht eines Ausführungsbeispiels eines erfindungsgemäßen Steckverbindungssystems mit einem ersten Element und einem zweiten Element in nicht verbundenem Zustand,
- Figur 2: eine perspektivische Ansicht eines Ausführungsbeispiels eines erfindungsgemäßen Steckverbindungssystems mit einem ersten Element und einem zweiten Element in verbundenem Zustand und
- Figur 3: eine Seitenansicht des Steckverbindungssystems gemäß Figur 1 mit dem ersten Element und dem zweiten Element in nicht verbundenem Zustand.

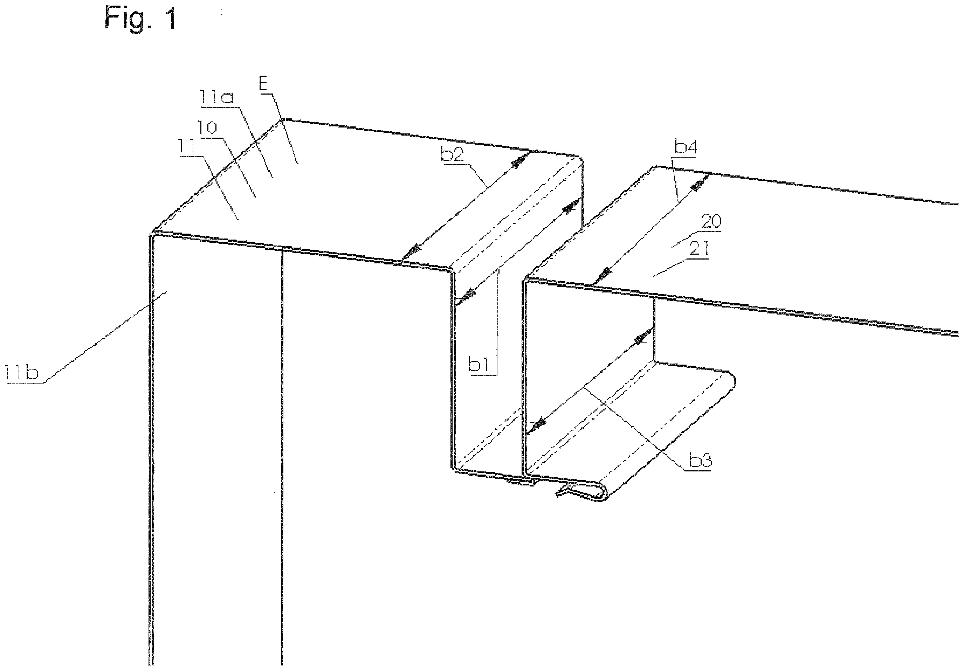

Die Figuren 1 bis 3 zeigen zwei unterschiedliche Ansichten eines Ausführungsbeispiels eines erfindungsgemäßen Steckverbindungssystems 1 mit wenigstens einem ersten Element 10 und einem zweiten Element 20.

Das erste Element 10 weist einen biegbaren ersten Grundkörper 11 mit einer ersten Außenfläche 11a und einer ersten Innenfläche 11b auf. Das erste Element 10 ist insbesondere einstückig ausgebildet. Das erste Element 10 kann aus einem Blech, beispielsweise einem Stahlblech, vorzugsweise einem Edelstahlblech, gefertigt sein, beispielsweise durch einen Stanz-Biege-Prozess.

Der erste Grundkörper 11 umfasst einen ersten Außenabschnitt 12 und einen ersten Verbindungsabschnitt 13, welcher einen ersten Abstandsabschnitt 14 und einen ersten Befestigungsabschnitt 15 aufweist, wobei der erste Abstandsabschnitt 14 zwischen dem ersten Außenabschnitt 12 und dem ersten Befestigungsabschnitt 15 angeordnet ist.

Der erste Abstandsabschnitt 14 ist an dem ersten Außenabschnitt 12 unter Bildung eines an der ersten Innenfläche 11b gebildeten im Wesentlichen rechten ersten Winkels α1 angeordnet, während der erste Befestigungsabschnitt 15 an dem ersten Abstandsabschnitt 14 unter Bildung eines an der ersten Außenfläche 11a gebildeten im Wesentlichen rechten zweiten Winkels α2 angeordnet ist. Damit ergibt sich in etwa eine stufenförmige Ausgestaltung durch den ersten Außenabschnitt 12, den ersten Abschnitt 14 und den ersten Befestigungsabschnitt 15.

Das zweite Element 20 weist einen biegbaren zweiten Grundkörper 21 mit einer zweiten Außenfläche 21a und einer zweiten Innenfläche 21b auf. Das zweite Element 20 ist insbesondere einstückig ausgebildet. Das zweite Element 20 kann aus einem Blech, beispielsweise einem Stahlblech, vorzugsweise einem Edelstahlblech, gefertigt sein, beispielsweise durch einen Stanz-Biege-Prozess.

Der zweite Grundkörper 21 umfasst einen zweiten Außenabschnitt 22 und eine zweiten Verbindungsabschnitt 23, welcher einen zweiten Abstandsabschnitt 24 und einen zweiten Befestigungsabschnitt 25 aufweist, wobei der zweite Abstandsabschnitt 24 zwischen dem zweiten Außenabschnitt 22 und dem zweiten Befestigungsabschnitt 25 angeordnet ist.

Der zweite Abstandsabschnitt 24 ist an dem zweiten Außenabschnitt 22 unter Bildung eines an der zweiten Innenfläche 21b gebildeten im Wesentlichen rechten dritten Winkels a3 angeordnet, während der zweite Befestigungsabschnitt 25 an dem zweiten Abstandsabschnitt 24 unter Bildung eines an der zweiten Innenfläche 21b gebildeten im Wesentlichen rechten vierten Winkels α4 angeordnet ist. Damit ergibt sich in etwa eine U-förmige Ausgestaltung durch den zweiten Außenabschnitt 22, den zweiten Abstandsabschnitt 24 und den zweiten Befestigungsabschnitt 25.

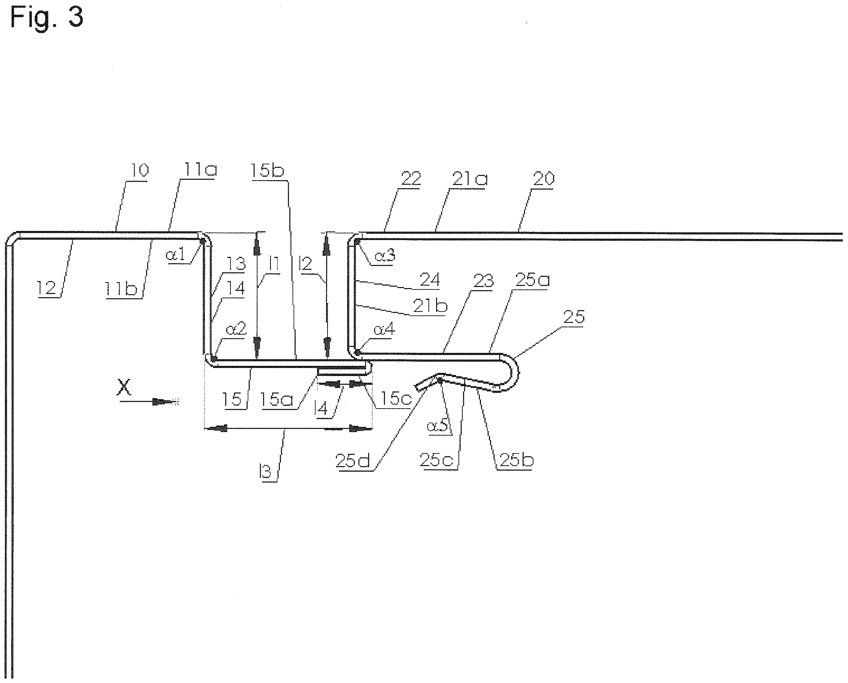

Der zweite Befestigungsabschnitt 25 ist etwa U-förmig mit einem ersten Schenkel 25a und einem zweiten Schenkel 25b ausgebildet, wobei der erste Schenkel 25a im Wesentlichen parallel zum zweiten Außenabschnitt 22 angeordnet ist und der zweite Schenkel 25b in einer Steckrichtung x gesehen einen Hinterschnitt 25c umfasst. Die Steckrichtung x verläuft im Wesentlichen parallel zum ersten Außenabschnitt 12 und/oder parallel zum zweiten Außenabschnitt 22, vorzugsweise parallel zum ersten Außenabschnitt 12 und parallel zum zweiten Außenabschnitt 22. Der Hinterschnitt 25c kann durch eine konkave Biegung 25d des zweiten Schenkels 25b, welche beispielsweise durch einen Knick mit einem Außenwinkel a5 zwischen 100° und 160°, beispielsweise von 135°, geformt sein kann, gebildet sein (vgl. insbesondere Figur 3).

Der erste Befestigungsabschnitt 15 umfasst einen Rastvorsprung 15a, der bei Einführen in Steckrichtung x in den zweiten Befestigungsabschnitt 25 hinter dem Hinterschnitt 25c verrastet. Zur Bildung des Rastvorsprungs 15a kann der erste Befestigungsabschnitt 15 einen ersten Teilabschnitt 15b, welcher sich an den ersten Abstandsabschnitt 14 anschließt, und einen sich an einer Kante 16 an den ersten Teilabschnitt 15b anschließenden zweiten Teilabschnitt 15c aufweisen, wobei der zweite Teilabschnitt 15c an der Kante 16 auf den ersten Teilabschnitt 15b gefaltet ist, insbesondere derart, dass der erste Teilabschnitt 15b und der zweite Teilabschnitt 15c im Wesentlichen parallel zueinander angeordnet sind. Der erste Teilabschnitt 15b weist eine dritte Länge 13 und der zweite Teilabschnitt 15c eine vierte Länge l4 auf, und wobei die vierte Länge l4 kleiner ist als die dritte Länge l3. Dadurch bildet sich am freien Ende des zweiten Teilabschnitts 15c eine Stufe angrenzend an den ersten Teilabschnitt 15b, welche den Rastvorsprung 15a ausbildet (siehe insbesondere Fig. 3).

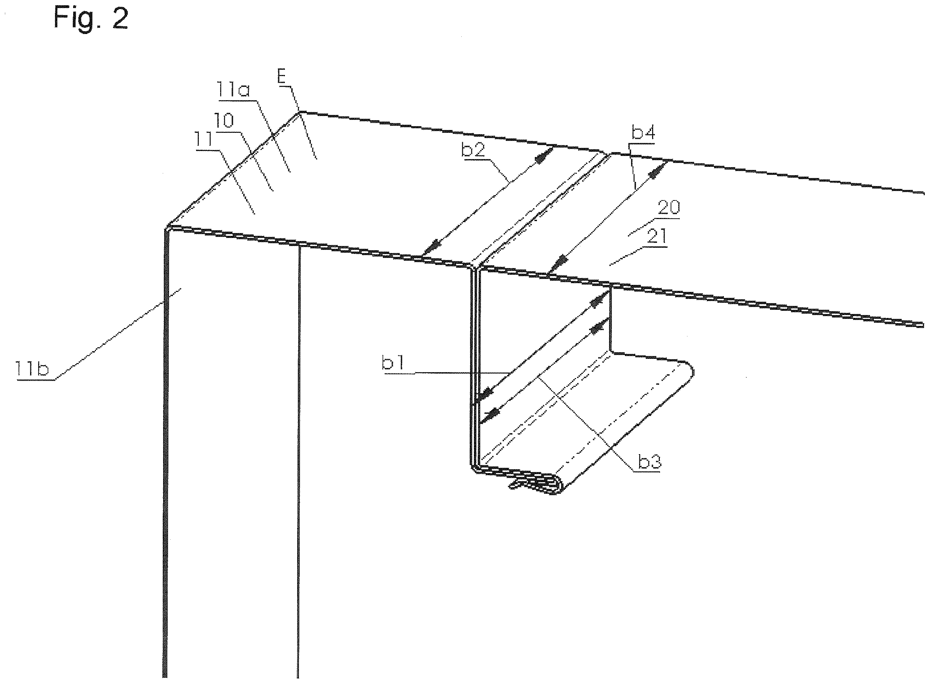

Der Rastvorsprung 15a und der Hinterschnitt 25c sind insbesondere derart relativ zueinander angeordnet, dass im verbundenen Zustand der erste Abstandsabschnitt 14 und der zweite Abstandsabschnitt 24 flächig aneinander anliegen (vgl. Figur 2).

Der erste Abstandsabschnitt 14 weist eine erste Länge l1 auf, welche insbesondere dem Abstand zwischen dem ersten Außenabschnitt 12 und dem ersten Befestigungsabschnitt 15 entspricht, und der zweite Abstandsabschnitt 24 weist eine zweite Länge l2 aufweist, welche insbesondere dem Abstand zwischen dem zweiten Außenabschnitt 24 und dem zweiten Befestigungsabschnitt 25 entspricht. Die erste Länge l1 und die zweite Länge l2 können derart aufeinander abgestimmt sein, dass im verbundenen Zustand die erste Außenfläche 11a des ersten Außenabschnitts 12 und die zweite Außenfläche 21a des zweiten Außenabschnitts 22 in einer Ebene E liegen (vgl. Figur 1).

Der erste Verbindungsabschnitt 13 kann eine Breite b1 aufweisen, welcher der Breite b2 des ersten Außenabschnitts 12 entspricht, und der zweite Verbindungsabschnitt 23 kann eine Breite b3 aufweisen, welcher der Breite b4 des zweiten Außenabschnitts 22 entspricht. Dabei können insbesondere die Breite b2 des ersten Außenabschnitts 12 und die Breite b4 des zweiten Außenabschnitts 22 einander entsprechend, so dass eine Verbindung über die gesamte Breite b2, b4 hergestellt werden kann.

Das erste Element 10 und das zweite Element 20 können als Teile eines Gehäuses eines Temperatur- oder Klimaschranks ausgebildet sein. Zur Herstellung des Temperatur- oder Klimaschranks können die Elemente 10, 20 durch die Steckverbindung miteinander verbunden werden, um das Gehäuse zu bilden. Anschließen kann ein Schaum auf die Innenseite des Gehäuses aufgebracht werden. Beispielsweise kann auch ein Innenkessel in das Gehäuse eingebracht und der Zwischenraum zwischen dem Gehäuse und dem Innenkessel ausgeschäumt werden.

### Bezugszeichenliste

- 1: Steckverbindungssystem
- 10: erstes Element
- 11: erster Grundkörper
- 11a: erste Außenfläche
- 11b: erste Innenfläche
- 12: erster Außenabschnitt
- 13: erster Verbindungsabschnitt
- 14: erster Abstandsabschnitt
- 15: erster Befestigungsabschnitt
- 15a: Rastvorsprung
- 15b: erster Teilabschnitt
- 15c: zweiter Teilabschnitt
- 16: Kante
- 20: zweites Element
- 21: zweiter Grundkörper
- 21a: zweite Außenfläche
- 21b: zweite Innenfläche
- 22: zweiter Außenabschnitt
- 23: zweiter Verbindungsabschnitt
- 24: zweiter Abstandsabschnitt
- 25: zweiter Befestigungsabschnitt
- 25a: erster Schenkel
- 25b: zweiter Schenkel
- 25c: Hinterschnitt
- 25d: Biegung
- b1: Breite
- b2: Breite
- b3: Breite
- b4: Breite
- l1: erste Länge
- l2: zweite Länge
- l3: dritte Länge
- l4: vierte Länge
- x: Steckrichtung
- E: Ebene
- α1: erster Winkel
- α2: zweiter Winkel
- α3: dritter Winkel
- α4: vierter Winkel
- α5: Außenwinkel

## Patentansprüche

1. Steckverbindungssystem (1) mit wenigstens einem ersten Element (10) und einem zweiten Element (20), wobei das erste Element (10) einen biegbaren ersten Grundkörper (11) aufweisend eine erste Außenfläche (11a) und eine erste Innenfläche (11b) und das zweite Element (20) einen biegbaren zweiten Grundkörper (21) aufweisend eine zweite Außenfläche (21a) und eine zweite Innenfläche (21b) aufweist, wobei der erste Grundkörper (11) einen ersten Au-βenabschnitt (12) und einen ersten Verbindungsabschnitt (13) aufweisend einen ersten Abstandsabschnitt (14) und einen ersten Befestigungsabschnitt (15), wobei der erste Abstandsabschnitt (14) zwischen dem ersten Außenabschnitt (12) und dem ersten Befestigungsabschnitt (15) angeordnet ist, und der zweite Grundkörper (21) einen zweiten Außenabschnitt (22) und eine zweiten Verbindungsabschnitt (23) aufweisend einen zweiten Abstandsabschnitt (24) und einen zweiten Befestigungsabschnitt (25), wobei der zweite Abstandsabschnitt (24) zwischen dem zweiten Außenabschnitt (22) und dem zweiten Befestigungsabschnitt (25) angeordnet ist, aufweist, wobei der erste Abstandsabschnitt (14) an dem ersten Außenabschnitt (12) unter Bildung eines an der ersten Innenfläche (11b) gebildeten im Wesentlichen rechten ersten Winkels (α1) angeordnet ist und der erste Befestigungsabschnitt (15) an dem ersten Abstandsabschnitt (14) unter Bildung eines an der ersten Außenfläche (11a) gebildeten im Wesentlichen rechten zweiten Winkels (α2) angeordnet ist, wobei der zweite Abstandsabschnitt (24) an dem zweiten Außenabschnitt (22) unter Bildung eines an der zweiten Innenfläche (21b) gebildeten im Wesentlichen rechten dritten Winkels (α3) angeordnet ist und der zweite Befestigungsabschnitt (25) an dem zweiten Abstandsabschnitt (24) unter Bildung eines an der zweiten Innenfläche (21b) gebildeten im Wesentlichen rechten vierten Winkels (α4) angeordnet ist, wobei der zweite Befestigungsabschnitt (25) etwa U-förmig mit einem ersten Schenkel (25a) und einem zweiten Schenkel (25b) ausgebildet ist, wobei der erste Schenkel (25a) im Wesentlichen parallel zum zweiten Außenabschnitt (22) angeordnet ist, **dadurch gekennzeichnet, dass** der zweite Schenkel (25b) in einer parallel zum ersten Außenabschnitt (12) und/oder zweiten Au-βenabschnitt (22) verlaufenden Steckrichtung (x) gesehen einen Hinterschnitt (25c) umfasst, wobei der erste Befestigungsabschnitt (15) einen Rastvorsprung (15a) umfasst, der bei Einführen in Steckrichtung (x) in den zweiten Befestigungsabschnitt (25) hinter dem Hinterschnitt (25c) verrastet.

2. Steckverbindungssystem nach Anspruch 1,
**dadurch gekennzeichnet, dass** im verbundenen Zustand der erste Abstandsabschnitt (14) und der zweite Abstandsabschnitt (24) flächig aneinander anliegen.

3. Steckverbindungssystem nach einem der vorhergehenden Ansprüche,
**dadurch gekennzeichnet, dass** der erste Abstandsabschnitt (14) eine erste Länge (l1) aufweist, welche insbesondere dem Abstand zwischen dem ersten Außenabschnitt (12) und dem ersten Befestigungsabschnitt (15) entspricht, und dass der zweite Abstandsabschnitt (22) eine zweite Länge (l2) aufweist, welche insbesondere dem Abstand zwischen dem zweiten Außenabschnitt (22) und dem zweiten Befestigungsabschnitt (25) entspricht, und dass die erste Länge (l1) und die zweite Länge (l2) derart aufeinander abgestimmt sind, dass im verbundenen Zustand die erste Außenfläche (11a) des ersten Außenabschnitts (12) und die zweite Außenfläche (21a) des zweiten Außenabschnitts (22) in einer Ebene (E) liegen.

4. Steckverbindungssystem nach einem der vorhergehenden Ansprüche,
**dadurch gekennzeichnet, dass** zur Bildung des Rastvorsprungs (15a) der erste Befestigungsabschnitt (15) einen ersten Teilabschnitt (15b), welcher sich an den ersten Abstandsabschnitt (14) anschließt, und einen sich an einer Kante (16) an den ersten Teilabschnitt (15b) anschließenden zweiten Teilabschnitt (15c) aufweist, wobei der zweite Teilabschnitt (15c) an der Kante (16) auf den ersten Teilabschnitt (15b) gefaltet ist, wobei der erste Teilabschnitt (15b) eine dritte Länge (l3) und der zweite Teilabschnitt (15c) eine vierte Länge (l4) aufweist, und wobei die vierte Länge (l4) kleiner ist als die dritte Länge (l3).

5. Steckverbindungssystem nach einem der vorhergehenden Ansprüche,
**dadurch gekennzeichnet, dass** zur Bildung des Hinterschnitts (25c) der zweite Schenkel (25b) des zweiten Befestigungsabschnitts (25) eine konkave Biegung (25d), beispielsweise in Form eines Knicks mit einem Außenwinkel (α5) zwischen 100° und 170°, aufweist.

6. Steckverbindungssystem nach einem der vorhergehenden Ansprüche,
**dadurch gekennzeichnet, dass** der erste Verbindungsabschnitt (13) eine Breite (b1) aufweist, welcher der Breite (b2) des ersten Außenabschnitts (12) entspricht, und dass der zweite Verbindungsabschnitt (23) eine Breite (b3) aufweist, welcher der Breite (b4) des zweiten Außenabschnitts (22) entspricht.

7. Steckverbindungssystem nach einem der vorhergehenden Ansprüche,
**dadurch gekennzeichnet, dass** das erste Element (10) einstückig und/oder das zweite Element (20) einstückig ausgebildet ist.

8. Steckverbindungssystem nach einem der vorhergehenden Ansprüche,
**dadurch gekennzeichnet, dass** das erste Element (10) und/oder das zweite Element (20) aus einem Blech, insbesondere einem Stahlblech, besonders bevorzugt aus einem Edelstahlblech, gefertigt sind.

9. Steckverbindungssystem nach einem der vorhergehenden Ansprüche,
**dadurch gekennzeichnet, dass** das erste Element (10) und das zweite Element (20) als Stanz-Biege-Element ausgebildet sind.

10. Gehäuse eines Klima- oder Temperaturschranks mit einem Steckverbindungssystem (1) mit wenigstens einem ersten Element (10) und einem zweiten Element (20) gemäß einem der vorhergehenden Ansprüche, wobei das erste Element(10) und das zweite Element (20) jeweils als Teil des Gehäuses ausgebildet sind.

## Claims

1. Plug connection system (1), with at least one first element (10) and a with a second element (20), wherein the first element (10) comprises a flexible first main body (11) comprising a first outer surface (11a) and a first inner surface (11b), and the second element (20) comprises a flexible second main body (21) comprising a second outer surface (21a) and a second inner surface (21b), wherein the first main body (11) comprises a first separating section (14) and a first fixation section (15), comprising a first outer section (12) and a first connection section (13), wherein the first separating section (14) is arranged between the first outer section (12) and the first fixation section (15), and the second main body (21) comprises a second separating section (24) and a second fixation section (25), comprising a second outer section (22) and a second connection section (23), wherein the second separating section (24) is arranged between the second outer section (22) and the second fixation section (25), wherein the first separating section (14) is arranged on the first outer section (12), forming an essentially right first angle (α1), formed on the first inner surface (11b) and the first fixation section (15) is arranged on the first separating section (14), forming an essentially right second angle (α2), formed on the first outer surface (11a), wherein the second separating section (24) is arranged on the second outer section (22), forming an essentially right third angle (α3), formed on the second inner surface (21b) and the second fixation section (25) is arranged on the second separating section (24), forming an essentially right fourth angle (α4), formed on the second inner surface (21b), wherein the second fixation section (25) is implemented essentially U-shaped, with a first arm (25a) and a second arm (25b), wherein the first arm (25a) is arranged essentially parallel to the second outer section (22),
**characterized in that** the second arm (25b) includes an undercut (25c) extending in a plug-in direction (x) parallel to the first outer section (12) or to the second outer section (22), wherein the first fixation section (15) includes an abutment ledge (15a) which engages with the second fixation section (25) behind the undercut (25c) when inserted in the plug-in direction (x).

2. Plug connection system in accordance with claim 1,
**characterized in that**, in a connected state, the first separating section (14) and the second separating section (25) rest flatly against each other.

3. Plug connection system in accordance with either of the preceding claims,
**characterized in that** the first separating section (14) comprises a first length (11) which, in particular, corresponds to the distance between the first outer section (12) and the first fixation section (15), and **in that** the second separating section (22) comprises a second length (12) which, in particular, corresponds to the distance between the second outer section (22) and the second fixation section (25), and in the first length (11) and the second length (12) complement each other such that, in a connected state, the first outer surface (11a) of the first outer section (12) and the second outer surface (21a) of the second outer section (22) lie in one plane (E).

4. Plug connection system in accordance with any of the preceding claims,
**characterized in that**, in order to form the abutment ledge (15a), the first fixation section (15) comprises a first subsection (15b), which joins the first separation section (14), and a second subsection (15c), which joins the first subsection (15b) at an edge (16), wherein the second subsection (15c) is folded at the edge (16) onto the first subsection, wherein the first subsection (15b) comprises a third length (13) and the second subsection (15c) comprises a fourth length (14), and wherein the fourth length (14) is smaller than the third length (13).

5. Plug connection system in accordance with any of the preceding claims,
**characterized in that**, in order to form the undercut (25c), the second arm (25b) of the second fixation section (25) comprises a concave curvature (25d), for example in the form of a bend having an outer angle (α5) of between 100° and 170°.

6. Plug connection system in accordance with any of the preceding claims,
**characterized in that** the first connection section (13) comprises a width (b1) which corresponds to the width (b2) of the first outer section (12), and **in that** the second connection section (23) comprises a width (b3) which corresponds to the width (b4) of the second outer section (22).

7. Plug connection system in accordance with any of the preceding claims,
**characterized in that** the first element (10) is implemented in one piece and/or **in that** the second element (20) is implemented in one piece.

8. Plug connection system in accordance with any of the preceding claims,
**characterized in that** the first element (10) and/or the second element (20) are manufactured from a plate, in particular from a steel plate, particularly preferably from a stainless steel plate.

9. Plug connection system in accordance with any of the preceding claims, **characterized in that** the first element (10) and the second element (20) are implemented as a punching / bending element.

10. Housing of a climate or temperature chamber having a plug connection system (1) with at least one first element (10) and with a second element (20) in accordance with any of the preceding claims, wherein the first element (10) and the second element (20) are each implemented as a part of the housing.

## Revendications

1. Système de liaison enfichable (1) comprenant au moins un premier élément (10) et un second élément (20),
- le premier élément (10) ayant un premier corps de base (11), flexible, avec une première surface extérieure (11a) et une première surface intérieure (11b) et le second élément (20) ayant un second corps de base (21) flexible, avec une seconde surface extérieure (21a) et une seconde surface intérieure (21b),
- le premier corps de base (11) ayant un premier segment extérieur (12) et un premier segment de liaison (13) avec un premier segment d'écartement (14) et un premier segment de fixation (15),
- le premier segment d'écartement (14) étant entre le premier segment extérieur (12) et le premier segment de fixation (15), et le second corps de base (21) a un second segment extérieur (22) et un second segment de liaison (23) comprenant un second segment d'écartement (24) et un second segment de fixation (25),
- le second segment d'écartement (24) étant entre le second segment extérieur (22) et le second segment de fixation (25),
- le premier segment d'écartement (14) étant prévu sur le premier segment extérieur (12) en formant un premier angle (α1) pratiquement droit, avec la première surface intérieure (11b) et le premier segment de fixation (15) étant prévu sur le second segment d'écartement (14) en faisant un second angle (α2) pratiquement droit du côté de la première surface extérieure (11a),
- le second segment d'écartement (24) étant prévu sur le second segment extérieur (22) en formant un troisième angle (α3), pratiquement rectangulaire avec la seconde surface intérieure (21b) et le second segment de fixation (25) étant sensiblement en forme de U avec une première branche (25a) et une seconde branche (25b),
- la première branche (25a) étant pratiquement parallèle au second segment extérieur (22),
système **caractérisé en ce que**
la seconde branche (25b) comporte une contre dépouille (25c) dans une direction d'enfichage (x) parallèle au premier segment extérieur (12) et/ou au second segment extérieur (22),
- le premier segment de fixation (15) comprend un relief d'accrochage (15a) qui, lors de l'engagement dans la direction d'enfichage (x) s'accroche dans le second segment de fixation (25), derrière la contre dépouille (25).

2. Système de liaison enfichable selon la revendication 1,
**caractérisé en ce qu'**
à l'état enfiché, le premier segment d'écartement (14) et le second segment d'écartement (24) sont appliqués en surface l'un à l'autre.

3. Système de liaison enfichable selon l'une des revendications précédentes,
**caractérisé en ce que**
le premier segment (14) a une première longueur (11) qui correspond notamment à la distance entre le premier segment extérieur (12) et le premier segment de fixation (15), et
le second segment d'écartement (22) a une seconde longueur (12) qui correspond notamment à la distance entre le second segment extérieur (22) et le second segment de fixation (25), et
la première longueur (11) et la seconde longueur (12) sont définies l'une par rapport à l'autre de façon qu'à l'état assemblé, la première surface extérieure (11a) du premier segment extérieur (12) et la seconde surface extérieure (21a) du second segment extérieur (22) sont dans un plan (E).

4. Système de liaison enfichable selon l'une des revendications précédentes,
**caractérisé en ce que**
pour former le relief d'accrochage (15a), le premier segment de fixation (15) comporte un premier segment partiel (15b), relié au premier segment d'écartement (14) et un second segment partiel (15c) relié par une arête (16) au premier segment partiel (15b),
le second segment partiel (15c) étant replié à l'arête (16) sur le premier segment partiel (15b),
- le premier segment partiel (15b) a une troisième longueur (13) et le second segment partiel (15c) a une quatrième longueur (14), et
la quatrième longueur (14) est inférieure à la troisième longueur (13).

5. Système de liaison enfichable selon l'une des revendications précédentes,
**caractérisé en ce que**
pour former la contre dépouille (25c), la première branche (25b) du second segment de fixation (25) a un pliage concave (25d), par exemple, sous la forme d'un pli ayant un angle extérieur (α5) compris entre 100° et 170°.

6. Système de liaison enfichable selon l'une des revendications précédentes,
**caractérisé en ce que**
le premier segment de liaison (13) a une largeur (b1) correspondant à la largeur (b2) du premier segment extérieur (12), et
le second segment de liaison (23) a une largeur (b3) qui correspond à la largeur (b4) du second segment extérieur (22).

7. Système de liaison enfichable selon l'une des revendications précédentes,
**caractérisé en ce que**
le premier élément (10) est réalisé en une seule pièce et/ou le second élément (20) est réalisé en une seule pièce.

8. Système de liaison enfichable selon l'une des revendications précédentes,
**caractérisé en ce que**
le premier élément (10) et/ou le second élément (20) sont en tôle notamment en tôle d'acier, et de manière particulièrement préférentielle en tôle d'acier inoxydable.

9. Système de liaison enfichable selon l'une des revendications précédentes,
**caractérisé en ce que**
le premier élément (10) et le second élément (20) sont des éléments pliés emboutis.

10. Boîtier d'une armoire de climatisation ou de mise en température avec un système de liaison enfichable (1) comprenant au moins un premier élément (10) et un second élément (20), selon l'une des revendications précédentes,
le premier élément (10) et le second élément (20) étant réalisés respectivement comme partie du boîtier.
